**Europäisches Patentamt**

**European Patent Office**

**Office européen des brevets**

(19)

(11) Veröffentlichungsnummer: **0 264 890 B1**

(12) ## EUROPÄISCHE PATENTSCHRIFT

(45) Veröffentlichungstag der Patentschrift: **12.06.91**

(21) Anmeldenummer: **87115288.0**

(22) Anmeldetag: **14.12.83**

(51) Int. Cl.⁵: **H04Q 11/04, H04Q 3/54**

(60) Veröffentlichungsnummer der früheren Anmeldung nach Art. 76 EPÜ: **0 113 884**

(54) **Schaltungsanordnung für eine Fernmeldeanlage, insbesondere Fernsprechnebenstellenanlage, mit Schnittstellenbaugruppen.**

(30) Priorität: **22.12.82 DE 3247598**
     **21.01.83 DE 3301966**

(43) Veröffentlichungstag der Anmeldung:
     **27.04.88 Patentblatt 88/17**

(45) Bekanntmachung des Hinweises auf die Patenterteilung:
     **12.06.91 Patentblatt 91/24**

(84) Benannte Vertragsstaaten:
     **AT BE CH DE FR GB IT LI NL SE**

(56) Entgegenhaltungen:

**ERICSSON REVIEW, Band 58, Nr. 3, 1981, Seiten 102-110, Stockholm, SE; K. PERSSON et al.: "Digital local exchanges AXE 10"**

**INTERNATIONAL SWITCHING SYMPOSIUM, Montréal, 21.-25. September 1981, "Session" 23C, "Paper" 2, Seiten 1-7, New York, US; W. STROBELT: "Digital switching in private networks"**

(73) Patentinhaber: **Siemens Aktiengesellschaft Wittelsbacherplatz 2 W-8000 München 2(DE)**

(72) Erfinder: **Beckinger, Günther Im Tann 7 W-8034 Unterpfaffenhofen(DE)**
Erfinder: **Egler, Gerhard Makartstrasse 15 W-8000 München 71(DE)**
Erfinder: **Rambold, Thomas, Dipl.-Ing. Brauhausgasse 28 W-8031 Gilching(DE)**

INTERNATIONAL SWITCHING SYMPOSIUM, Montréal, 21.-25. September 1981, "Session" 34A, "Paper" 3, Seiten 1-9, New York, US; F.J. SCHRAMEL et al.: "The peripheral control domain, an all-digital intelligent terminal for subscribers and trunks in the PRX/D system"

INTERNATIONAL SWITCHING SYMPOSIUM, Montréal, 21.-25. September 1981, "Session" 14A, "Paper" 1, Seiten 1-9, New York, US; M. BALLARD et al.: "The E10.S-TSS.5: A multi-purpose digital switching system"

**Beschreibung**

Die Erfindung bezieht sich auf eine Schaltungsanordnung für eine Fernmeldeanlage, insbesondere Fernsprechnebenstellenanlage, mit Schnittstellenbaugruppen, welche jeweils sowohl mit einem Sprechwegekoppelnetzwerk als auch über ein Datenübertragungsleitungsbündel mit einer für die Verbindungsherstellung der ankommend bzw. abgehend belegbaren Teilnehmer- bzw. Verbindungsleitungen vorgesehenen Steuerung in Verbindung stehen und wobei die Informationen über das Sprechwegekoppelnetzwerk im Pulscodemodulationsverfahren und die Informationen über das Datenübertragungsleitungsbündel in einem Nachrichtenformat mit variabler Datenlänge (HDLC-Prozedur) übertragen werden.

Aus der Zeitschrift "Telcom Report 2" (1979), Heft 3, Seite 174 bis 183 ist eine Architektur einer neuen Linie digitaler öffentlicher Fernsprechvermittlungen bekannt, bei der auch Teilnehmer- und Leitungsübertragungsgruppen über jeweils eine Schnittstellenbaugruppe pro solcher Gruppe mit einem Sprechwegekoppelnetzwerk in Verbindung stehen. Die Sprachinformationen werden über das Sprechwegekoppelnetzwerk im Pulscodemodulationsverfahren übertragen. Die anderen Informationen, die für die Verbindungswegeherstellung erforderlich sind und die zu einem der Gruppe zugeordneten Gruppenprozessor zu übertragen sind, werden über getrennte Datenübertragungsleitungen direkt diesem Gruppenprozessor zugeführt, während die weiteren Informationen, die für die Verbindungswegeherstellung und die Verarbeitung in der zentralen Steuerung erforderlich sind über getrennte Datenübertragungsleitungen und über einen Gruppenkoppler sowie über das gemeinsame Koppelnetz zwischen den Schnittstellenbaugruppen und der zentralen Steuerung bzw. zwischen den Gruppenprozessoren und der zentralen Steuerung ausgetauscht werden. Die Informationen, die über die besonderen Datenübertragungsleitungsbündel bzw. über die zentralen Zeichenkanäle gegeben werden, werden in einem Nachrichtenformat mit variabler Datenlänge (HDLC-Prozedur) übertragen.

Ferner ist aus der Zeitschrift NEC Research und Development, Nr. 64, Januar 1982, Seite 86 bis Seite 93 ein digitales Übertragungssystem bekannt, bei dem über besondere Übertragungswege, die zum Teil auch Sprachübertragungswege einschließen, zwischen zentralen Steuerungen (RLOC und HDTIC) Informationen ausgetauscht werden. Die Sprachinformationen werden im Pulscodemodulationsverfahren übertragen. Die zwischen den zentralen Steuerungen zu übertragenden Informationen werden vom Nachrichtenformat mit variabler Datenlänge umgesetzt in Pulscodeinformationen und über den genannten Übertragungsweg in einem bestimmten Pulsrahmen bestimmter Länge übertragen. Der vorgenannte Informationsaustausch zwischen den zentralen Steuerungen erfolgt dabei nicht über die Schnittstellenbaugruppen, die in diesem System in analoger Technik arbeiten.

Die Aufgabe der vorliegenden Erfindung besteht darin, in einfacher Weise eine Schnittstellenbaugruppe für die Anschaltung von Teilnehmer- und Verbindungsleitungen an das Sprechwegekoppelnetzwerk nur für den Informationsaustausch zwischen verschiedenen Steuerungen vorzusehen.

Dies wird dadurch erreicht, daß eine Schnittstellenbaugruppe (SB) mittels einer ihr zugeordneten Sende- und Empfangseinrichtung (HDP), welche die von der zugeordneten Steuerung (z.B. GP bzw. ZS) empfangenen Informationen in pulscodierte Informationen umsetzt, zum Informationsaustausch mit einer anderen Steuerung über das Sprechwegekoppelnetzwerk (SN) mit einer dieser Steuerung zugeordneten Schnittstellenbaugruppe (z.B. SBZ) mit einer entsprechenden Sende- und Empfangseinrichtung (HDP) verbindbar ist.

Die Verwendung vorhandener Schnittstellenbaugruppen, die normalerweise zur Anschaltung von Teilnehmer- und Verbindungsleitungen an das Sprechwegekoppelnetzwerk dienen, auch zur Anschaltung von Steuerungen an das Sprechwegekoppelnetzwerk ermöglicht den Austausch von Informationen zwischen vorhandenen, mit solchen Schnittstellenbaugruppen verbundenen Steuerungen direkt über das Sprechwegekoppelnetzwerk ohne die Verwendung von zusätzlichen Datenübertragungsleitungsbündel. Hierdurch kann der Datenaustausch sowohl innerhalb der gleichen Anlage als auch zwischen Steuerungen unterschiedlicher anlagen einheitlich über das Sprechwegekoppelnetzwerk erfolgen. Der Systemaufbau wird hiermit erheblich vereinfacht.

Gemäß einer weiteren Ausbildung der Erfindung sind die einzelnen Gruppensteuerungen sowohl untereinander als auch mit der zentralen Steuerung über die zugeordneten Schnittstellenbaugruppen und das Sprechwegekoppelnetzwerk verbindbar.

Nachstehend ist anhand von drei Figuren ein Ausführungsbeispiel der Erfindung beschrieben.

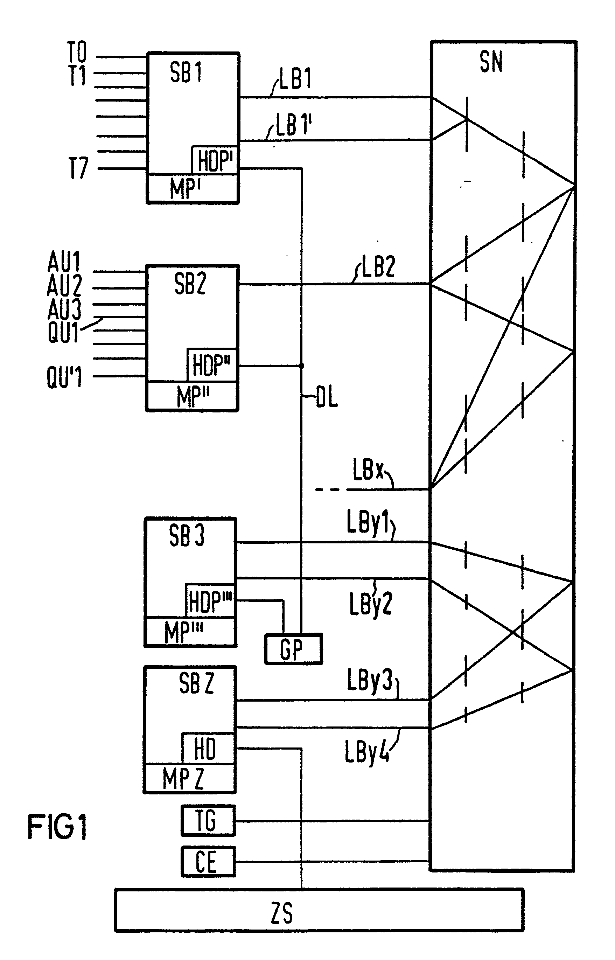

Die FIG 1 zeigt eine digitale Fernsprechnebenstellenanlage in vereinfachter Darstellung, anhand der die Funktionen des Verbindungsaufbaus erläutert sind. In diesem Zusammenhang wird auch auf die Veröffentlichung in der in der Einleitung genannten Zeitschrift "telcom report 2" verwiesen.

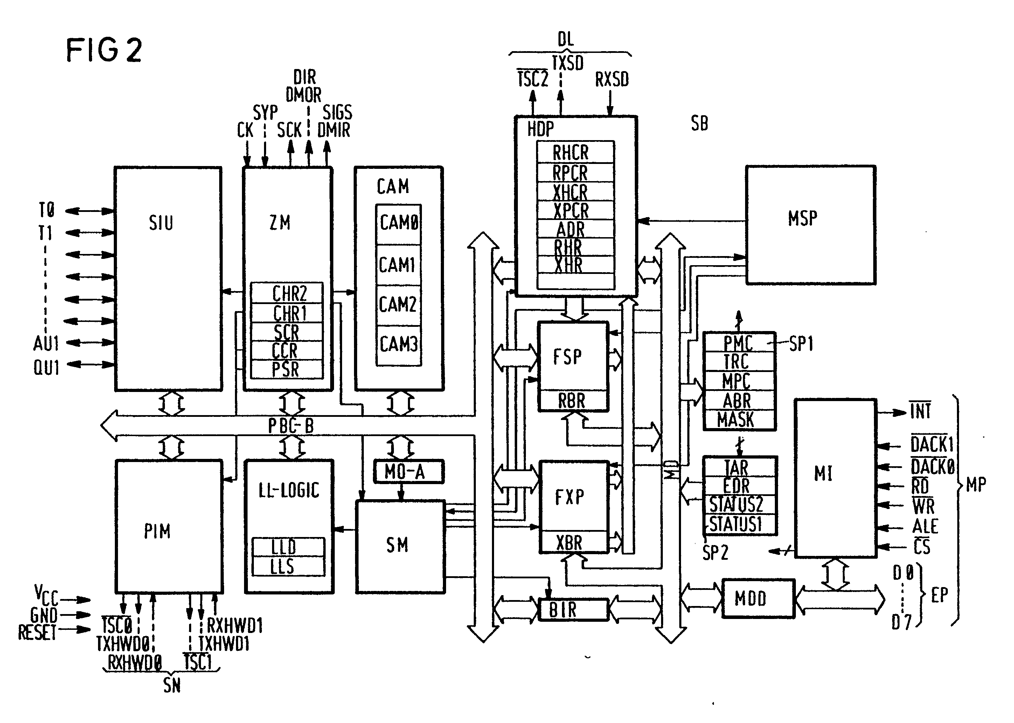

Aus der FIG 2 sind die Einzelheiten der Schnittstellenbaugruppe entnehmbar, die nachfolgend beschrieben sind.

3

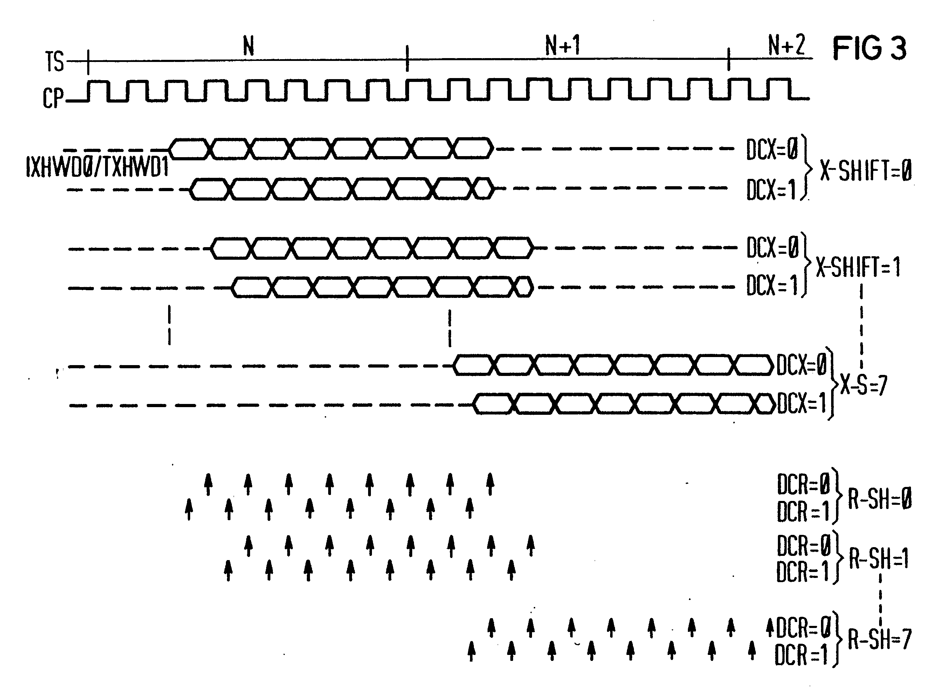

Die FIG 3 zeigt Pulsdiagramme und Zeichenkombinationen, die für den Informationsaustausch in der beschriebenen Schnittstellenbaugruppe verwendet werden.

In FIG 1 ist eine digitale Fernsprechnebenstellenanlage mit den Schnittstellenbaugruppen SB1 und SB2 gezeigt. An die Schnittstellenbaugruppe SB1 sind acht Teilnehmerleitungen T0 bis T7 anschaltbar. Es können aber auch mit einer besonderen Maßnahme bis zu 16 Teilnehmerleitungen angeschlossen werden. An die Schnittstellenbaugruppe SB2 sind Verbindungsleitungen unterschiedlicher Art, z.B. Amtsleitungen AU und Querverbindungsleitungen QU anschaltbar und zwar auch acht solcher Leitungen. Jede der Schnittstellenbaugruppen ist über ein entsprechendes Leitungsbündel LB1 bzw. LB2 mit dem Sprechwegekoppelnetzwerk SN und über ein gemeinsames Datenübertragungsleitungsbündel DL mit der Gruppensteuerung GP verbunden. Über jedes Leitungsbündel sind Daten für die Sprachübertragung und, wie nachstehend beschrieben wird, auch andere Daten im Pulscodemodulationsverfahren übertragbar. Der Informationsaustausch erfolgt über das Sprechwegekoppelnetzwerk SN zwischen angeschalteten Teilnehmerstellen der Nebenstellenanlage bzw. zwischen angeschalteten Verbindungsleitungsübertragungen bzw. zwischen Teilnehmerstellen und Verbindungsleitungsübertragungen. Über das Sprechwegekoppelnetzwerk SN sind auch zusätzliche, nicht dargestellte Einrichtungen wie Zusatzspeicher, Dateneinrichtungen usw., sowie ein dargestellter Tongenerator TG und ein oder mehrere MFC-Empfänger CE anschaltbar.

Ferner sind weitere Schnittstellenbaugruppen SB3 und SBZ vorgesehen, welche jeweils der Gruppensteuerung GP bzw. der zentralen Steuerung ZS zugeordnet und mit dem Sprechwegekoppelnetzwerk SN zwecks Austausch von Informationen und Befehlen verbunden sind. Die Gruppensteuerungen sind in größeren Fernsprechanlagen jeweils mehreren Gruppen von Teilnehmer- und/oder Verbindungsleitungen zugeordnet. Die Zusammenarbeit der einzelnen Gruppensteuerungen wird von der zentralen Steuerung ZS koordiniert. Von der zentralen Steuerung ZS werden auch alle zentralen Aufgaben wahrgenommen. Da die jeweiligen, den verschiedenen Steuerungen GP bzw. ZS zugeordneten Schnittstellenbaugruppen SB3 und SB2 über das Sprechwegekoppelnetzwerk SN miteinander verbindbar sind, sind Datenübertragungsleitungen zwischen den verschiedenen Steuerungen überflüssig. Der Informationsaustausch zwischen diesen Steuerungen kann ebenso wie der Austausch zwischen Steuerungen unterschiedlicher Nebenstellenanlagen auf die gleiche Art und Weise erfolgen, da alle vorhandenen Schnittstellenbaugruppen SB1 bis SBZ in gleicher Weise ausgeführt sind.

Der Verbindungsaufbau läuft im Prinzip folgendermaßen ab: Die Schnittstellenbaugruppe, z.B. SB1, erhält einen Anreiz, wenn ein Teilnehmer abhebt. Sie verbindet diesen rufenden Teilnehmer über das Sprechwegekoppelnetzwerk SN mit dem Tongenerator TG und mit dem MFC-Empfänger CE. Mit den gewählten Ziffern wird der Verbindungswunsch der zentralen Steuerung ZS mitgeteilt, die die Vollständigkeit einer Kennzahl und die entsprechende Berechtigung der anrufenden Teilnehmerstelle bzw. der ankommend belegten Verbindungsleitungsübertragung prüft. Von der zentralen Steuerung ZS wird, wie bei der Verbindungsherstellung zum Tongenerator TG und zum MFC-Empfänger CE, der weitere Verbindungsaufbau zur anzurufenden Teilnehmerstelle bzw. zur zu belegenden Verbindungsleitungsübertragung durchgeführt. Falls erforderlich werden Informationen der Schnittstellenbaugruppe, z.B. SB1, in Abhängigkeit von Befehlen der zentralen Steuerung ZS zu einer anderen Schnittstellenbaugruppe, z.B. SB2, über das Sprechwegekoppelnetzwerk SN übertragen. Gegebenenfalls werden auch über das Sprechwegekoppelnetzwerk SN Daten von einer Gruppensteuerung zu einer anderen Gruppensteuerung übertragen.

Bei der dargestellten Fernsprechnebenstellenanlage ist vorausgesetzt, daß den einzelnen Teilnehmerstellen bereits Umsetzeinrichtungen für die Umsetzung analoger Informationen in digitale Informationen zugeordnet sind.

Die Übertragung der Sprachinformationen zum Sprechwegekoppelnetzwerk SN erfolgt über eine PCM-Schnittstellenschaltung PIM (FIG 2). Es wird beispielsweise ein dem Übertragungssystem PCM 30 entsprechendes System verwendet, bei dem die gleichzeitige Übertragung von 32 Gesprächen z.B. über zwei symmetrische Adernpaare möglich ist. Für jeden der 32 Sprechkreise werden in beiden Richtungen 8000 Abtastwerte pro Sekunde in Form von 8-bit-Codewörtern übertragen. In jeder Richtung müssen also innerhalb von 125 $\mu$s nacheinander 32 Codewörter mit je 8 Bit übertragen werden. Die 32 Codewörter bilden zusammen einen Pulsrahmen. Die Pulsrahmen werden unmittelbar aneinandergereiht übertragen.

Zur zentralen Steuerung ZS werden die Informationen in einem Nachrichtenformat mit variabler Datenlänge übertragen und zwar nach dem Hochpegel-Zeichengabeverfahren HDLC. Das Format der Informationen wird mit der Hochpegeldatenübertragungssteuerung in einen 64-kbit/s-Bitstrom umgesetzt. Das Informationsformat ist in der Länge von 5 bis 32 Byte variabel und enthält in der Regel Adresse, Folgenummer, Prüfzeichen und die eigentliche Nachricht.

Bei den neuen digitalen Vermittlungssystemen ist die Einbringung neuer Dienste, die Erweiterungsfähigkeit der Hardware und Software, die Dezentralisierung der Steuerlogik und die hohe Betriebssicherheit bei einfacher Wartung sowie die Verringerung der Kosten von großer Bedeutung. Die technischen Zielsetzungen sind in diesem Bereich ein wesentlich erhöhtes Maß an Flexibilität und Programmierbarkeit der Betriebszustände, Vorverarbeitung der peripheren Anreize, einfacher modularer Aufbau der Baugruppen und reduzierte Verdrahtung nach außen sowie die Bereitstellung einer leistungsfähigen Schnittstelle zu abgesetzten, nicht zur Anlage gehörenden Einrichtungen und zur zentralen Steuerung. Auf diese Weise soll der unmittelbare Anschluß von digitalen Teilnehmerbaugruppen an ein voll digitalisiertes Netz mit beliebiger Integrierung von Diensten ermöglicht werden.

Die in Fig. 2 gezeigte Schnittstellenbaugruppe enthält als wichtigste Bestandteile eine Schnittstellenschaltung SIU, an die die Teilnehmer, z. B. T1, und/oder Verbindungsleitungsübertragungen, z. B. die Amtsleitungsübertragung AU1 oder die Querverbindungsleitungsübertragung QU1 angeschlossen sind. Über die Verbindungsleitungen zu den Teilnehmerendstellen bzw. zu den Verbindungsleitungsübertragungen und gegebenenfalls zu anderen Peripheriebausteinen wird der Datenaustausch mit der Schnittstellenbaugruppe geführt. In der ersten Rahmenhälfte eines Pulsrahmens werden die Daten von der Schnittstellenbaugruppe SB zum entsprechenden Peripheriebaustein, z. B. zur Teilnehmerstelle, übertragen und in der zweiten Rahmenhälfte werden die im Peripheriebaustein, beispielsweise Teilnehmerstelle oder Verbindungsleitungsübertragung, vorliegenden Daten zur Schnittstellenbaugruppe SB zurückgegeben. Ein zentraler Taktgenerator liefert ein 8 kHz-Signal zur Synchronisierung des Datenaustausches. Die Datenübertragung erfolgt unabhängig vom Takt der Schnittstellenbaugruppe SB immer mit einem 512 kHz-Takt. Es werden synchron Daten in beiden Richtungen ausgetauscht, und zwar jeweils 64 Kbit. Die Signalisierungsdaten werden in 8 bit/Rahmen in beiden Richtungen übertragen. Die Kontrolldaten werden in 1 byte/Rahmen ebenfalls in beiden Richtungen übertragen. Im Schnittstellenbaustein SB werden die jeweils ausgetauschten Daten zwischengespeichert. Hierzu sind pro Übertragungskanal (Sendekanal und Empfangskanal) sowie getrennt für die Signalisierungsinformationen abhängig von der Übertragungsrichtung entsprechende Zwischenspeicher vorgesehen; d. h. ein Empfangsregister zur Zwischenspeicherung der Daten, die im A-Kanal empfangen werden.

Das gleiche gilt für die im B-Kanal übertragenen Informationen und ebenso für die empfangenen Signalinformationen sowie für die umgekehrten Übertragungsrichtungen, denen auch jeweils entsprechende getrennte Speicher zugeordnet sind. Hierzu sei noch bemerkt, daß vom Peripheriebaustein, beispielsweise von einer Teilnehmerstelle, kommende Signalisierungsbytes in einem Speicher für die aktuellen Zustände der Peripheriebausteine aufgenommen werden.

In einem zusätzlichen Speicher LLS ist jeweils der vorhergehend, zuletzt festgestellte Zustand noch vorhanden und ein Vergleicher stellt durch Vergleich Zustandsveränderungen an der Teilnehmerstelle bzw. in der angeschalteten Verbindungsleitungsübertragung fest. Die Zustandsänderung wird in dem Zustandsspeicher LLS gekennzeichnet. Eine den Zustandsspeicher LLS enthaltende LL-Logic (last look logic) überprüft laufend den Zustand der Speicher LLS, LLD, die die Zustandsänderungen kennzeichnen. Jedem Ausgang zu einem Peripheriebaustein ist ein derartiger Zustandsspeicher zugeordnet. Wenn sich in einem solchen Speicher mindestens ein Bit ändert, wird in dem Zustandsspeicher das zugeordnete Bit gesetzt und diese Änderung durch interne Steuersignale internen Steuerschaltmitteln SM der Schnittstellenbaugruppe SB mitgeteilt.

Die PCM-Schnittstellenschaltung PIM verbindet die Schnittstellenbaugruppe SB mit dem Sprechwegekoppelnetzwerk. Diese PCM-Schnittstellenschaltung PIM bewirkt in der Empfangsrichtung die Übernahme der seriellen Informationen mit der programmierten Taktflanke, ferner erfolgt die Serien-/Parallel-Umsetzung der ankommenden Daten und das Zwischenspeichern des Informationsbytes in einem entsprechenden Pufferspeicher. In der Senderichtung erfolgt eine Parallel-/Serien-Umsetzung der Informationen, eine Ausgabe der Daten mit der programmierten Taktflanke sowie das Erzeugen der Kontrollsignale zur Ansteuerung externer Treiberstufen und das Schalten der Ausgangsstufen.

Ferner ist ein Anpassungsspeicher CAM vorgesehen, der die Übertragung der empfangenen PCM-Informationen zwischen dem Sprechwegekoppelnetzwerk und den Teilnehmer-/Verbindungsleitungsübertragungsanschlüssen steuert. Der Speicherumfang beträgt 4 × 8 Byte und betrifft die Senderichtung für Kanal A mit Zwischenspeicher CAM, die Senderichtung B mit Zwischenspeicher CAM1, die Empfangsrichtung A mit Zwischenspeicher CAM2 und die Empfangsrichtung B mit Zwischenspeicher CAM3. Jedem der an der Schnittstellenschaltung SIU angeschalteten Peripheriebausteine, z. B. Teilnehmer, ist eine entsprechende CAM-Zeile zugeordnet. Die Datenübertragung wird durch Eintragen des Zeitschlitzes und des PCM-Kanals unter der Adresse des zugeordneten Teilnehmers im entsprechenden Zwischenspeicher CAM gekennzeichnet. In dem jeweiligen Zwischenspeicher CAM kann die Datenübertragung zwischen der peripheren Steuerung MP und den Übertragungskanälen programmiert werden. Jeder Zwischenspeicher CAM wird in jedem Zeitschlitz vollständig ausgelesen und ausgewertet. Die Informationsübertragung in beiden Richtungen wird in Abhängigkeit davon durchgeführt.

Zeitschaltmittel ZM erzeugen alle aus einem Grundtakt zur Steuerung des PCM-Systems abzuleitenden Takte. Außerdem werden Takt-und Übernahmesignale für die Schnittstellen zu den Peripheriebausteinen und zum Sprechwegekoppelnetzwerk erzeugt. Die nach außen zu externen Peripheriebausteinen EP führenden Leitungen deuten an, daß die erzeugten Takte auch zu deren Steuerung zu verwenden sind. Im Speicher MO-A wird die Art des Austausches von Informationen mit variabler Datenlänge sowie die Verwendungsweise eines Speichers FXP festgelegt.

Das interne Datenübertragungsleitungsbündel PBC-B verbindet alle Funktionsteile des PCM-Synchronblockes der Schnittstellenbaugruppe SB. Die Schnittstellen zum Asynchronteil bilden der Speicher SXP und ein Speicher FSP sowie eine Umsetzeinrichtung BIR. Das interne Datenübertragungsleitungsbündel PBC-B wird im Zeitmultiplex betrieben. In der einen Zeitschlitzhälfte wird der Synchronverkehr, d. h. die PCM-Informationsübertragung und in der anderen Zeitschlitzhälfte der Asynchronverkehr abgewickelt. Auf diese Weise wird intern ein optimaler Datendurchsatz erreicht, ohne daß der Zugriff von den Rechnerschnittstellen beeinflußt wird.

Die über das Datenübertragungsleitungsbündel DL in einem Nachrichtenformat mit variabler Datenlänge (HDLC-Prozedur) zur zentralen Steuerung übertragenen Daten gehören zu dem sogenannten Asynchronteil. Die entsprechende Sende- und Empfangseinrichtung HDP dient dem Austausch von Signalisierungs- und Steuerinformationen im entsprechenden Nachrichtenformat über eine serielle, entsprechende Schnittstelle. Die Empfangseinrichtung hat folgende Aufgaben: Erkennung der Markierungskennzeichen; Erkennung einer individuellen Adresse; eine Nullstellfunktion; Serien-/Parallel-Umsetzung; Abspeichern der entsprechenden Befehle in einem Empfangs-Befehlsspeicher RHCR; Abspeichern des Anwenderbefehls im Empfangsbefehlsspeicher RPCR; Zwischenspeichern weiterer Informationsbytes im Empfangshaltespeicher RHR; Redundanzprüfung; Rahmenprüfung; Umschalten zwischen den PCM-Übertragungswegen 0 und 1 im normalen Kanalbetrieb. Die Sendeeinrichtung hat folgende Aufgaben: Selbständige Steuerung des Übertragungsvorganges; Nullstellfunktion; Parallel-/Serien-Umsetzung; selbsttätige Anforderung der Informationen von den verschiedenen internen Informationsquellen; Sendung des Inhaltes des Übertragungsbefehlsregisters der betreffenden Sendeeinrichtung, wenn der Sendevorgang von der internen Steuerung veranlaßt wurde; Sendung des Inhaltes des Sendebefehlsspeichers XPCR als Anwenderbefehl; Einfügen eines Blockprüfzeichens CRC am Ende des Informationsrahmens und bei normalem Kanalbetrieb das Senden über den ausgewählten PCM-Übertragungsweg 0 der 1.

Ein Speicher MSP der internen Steuerung kontrolliert die logische Ebene der Prozedur für die Übertragung von Informationen mit variabler Datenlänge (HDLC-Prozedur) im Sinne der Verteilung der empfangenen Informationspakete und der Zusammenstellung der an die zentrale Steuerung zu übertragenden Informationspakete. In der Sende- und Empfangseinrichtung HDP sind die Anwenderbefehle auszuwerten, ist das Anschalten der angeforderten Informationsquelle an den Übertragungspufferspeicher durchzuführen, ist das Weiterschalten der ankommenden Informationen im Empfangspufferspeicher an die Informationssenke durchzuführen, sind die Sende- und Quittungssignale zu erzeugen bzw. auszuwerten, sind die Funktionen einer Steuerung mit vielen Ausgängen für die Übertragung durchzuführen, ist die Datenübergabe an die periphere Steuerung durchzuführen und ist die Datenübergabe an den Synchronteil der Sende- und Empfangseinrichtung durch Austausch von Steuersignalen durchzuführen.

Ferner ist in der logischen Ebene die Auswertung der Befehle der Sende- und Empfangseinrichtung HDP notwendig, ist das Starten des Sendevorgangs erforderlich und ist die Zusammenstellung des Antwortpaketes einschließlich des Informationsbytes notwendig, welches die Anwenderantwort enthält.

Mit einer Schnittstellenschaltung MI erfolgt die Ansteuerung der peripheren Steuerung MP und die Zwischenspeicherung für die über die entsprechende Datenübertragungsleitung MD zu übertragenden Informationen. Die Steuerlogik für dieses Datenübertragungsleitungsbündel MD verwendet die Signale von der Datenübertragungsleitung der peripheren Steuerung MP zur Ansteuerung der internen Funktionsblöcke. Die Freigabe erfolgt durch ein normalerweise aus einer Adreßcodierung gewonnenes Signal CS; mit einem Signal WR übergibt die periphere Steuerung MP Informationen an die Schnittstellenschaltung MI, während mit einem Signal RD die Informationen abgerufen werden.

Die Speicher der peripheren Steuerung MP sind mit direkter Ansteuerung zugänglich. Durch Programmierung der Befehlsspeicher wird ein Teil des funktionellen Verhaltens der Schnittstellenbaugruppe SB festgelegt. Über die Zustandsspeicher werden Informationen an die periphere Steuerung MP zurückgemeldet. Der Adressenspeicher dient der Zwischenspeicherung von Adreßinformationen. Die vorgenannten Speicher sind mit SP1 bzw. SP2 bezeichnet.

Durch Übergabe von Befehlen in ein Register MPC des Speicher SP1 werden die Funktionen für die zwischen der internen Steuerung und der Steuerung der Sende- und Empfangseinrichtung HDP auszutauschenden Informationen gesteuert. Durch Setzen einzelner Bits in dem Register MPC werden entsprechende Funktionsabläufe der Steuerschaltmittel SM eingeleitet. Die eingeleiteten Steuervorgänge können durch einen Zurücksetzbefehl unterbrochen werden. Ein Registerteil TRC des Speichers SP1 dient der Durchschaltung der 64 kbit-Kanäle zur Schnittstellenschaltung MI der internen Steuerung. Im Speicher SP2 ist in einem Zustandsregister STATUS 1 eine Kennzeichnung für die Ursache der Unterbrechung der internen Steuerung gespeichert. Ein entsprechend gesetztes Bit steuert die Unterbrechung der internen Steuerung. Durch das Lesen dieses Zustandsregisters STATUS 1 werden die Zustandsbits abhängig von den der internen Steuerung übergebenen Informationen individuell zurückgesetzt. Durch ein zweites Zustandsregister STATUS 2 des Speichers SP2 können einzelne Bits des Zustandsregisters STATUS 1 maskiert werden. Im Zustandsregister STATUS 2 sind Informationen abgelegt, auf die die interne Steuerung bei Bedarf ohne Aufforderungsunterbrechung zugreifen kann. Der entsprechende Speicherinhalt wird durch die Zustände des Umsetzers BIR zwischen dem internen Datenübertragungsleitungsbündel PBC-B und dem Datenübertragungsleitungsbündel für Informationen der zentralen Steuerung, der vorgesehenen Sendeschaltmittel und des Sendespeichers FXP beeinflußt. Ein Registerteil EDR des Speichers SP2 beinhaltet Daten über Fehlerursachen und dient der näheren Definierung des im Zustandsregister STATUS 1 gesetzten Bits für die Fehlerkennzeichnung. Nach einem Auslesen des Registers EDR werden alle Bits zurückgesetzt. Eine aus einem Register TAR des Speichers SP2 ausgelesene Information dient der Durchschaltung von 64 kBit-Kanälen zwischen der Schnittstellenschaltung MI für die interne Steuerung und den Teilnehmer-/Verbindungsleitungsanschlüssen bzw. dem Sprechwegekoppelnetzwerk SN:

Ein Register ABR des Speichers SP1 dient der Aufnahme indirekter Adressen, während ein Register ADR des Speichers SP2 der Aufnahme der der Schnittstellenbaugruppe SB zugeordneten spezifischen Adresse dient.

Der Sendespeicher FXP ist ein 16-Byte-Flipflopspeicher und dient im Normalbetrieb der Zwischenspeicherung von Informationspaketen, die für die interne Steuerung bereitzustellen sind und von dieser über die Sende- und Empfangseinrichtung HDP abgerufen werden. Diese Art von Informationen können als "Direktinformation" bezeichnet werden und werden über das Datenübertragungsleitungsbündel DL in einem Nachrichtenformat mit variabler Datenlänge (HDLC-Prozedur) übertragen. Diese Informationen werden abhängig von der Einstellung eines Zustandsregisters MO-A entweder von der Zustandslogik LL-Logic über das interne Datenübertragungsleitungsbündel PBC-B eingeschrieben oder von der internen Steuerung als Informationsblock mit direkter Adressierung zur Verfügung gestellt. Werden in Abhängigkeit vom Programm der internen Steuerung 64 kBaud-Kanäle zwischen dem Sprechwegekoppelnetzwerk SN und der Schnittstellenschaltung PIM der internen Steuerung durchgeschaltet, so dient der Sendespeicher FXP der Zwischenspeicherung der anfallenden Programmunterbrechungsadressen, bevor diese über das Sende-Adressenregister TAR des Speichers SP2 an die periphere Steuerung MP weitergegeben werden. In diesem Betriebsfall steht der Sendespeicher FXP nicht für die Pufferung von Sendedaten zur Verfügung.

Im doppeltgerichteten Speicher FSP für Steuerdaten können bis zu 16 Nutzbytes zwischengespeichert werden. Dieser Speicher FSP wird direkt adressiert und dient dem Informationsaustausch zwischen der zentralen Steuerung und der internen Steuerung über die Sende- und Empfangseinrichtung HDP und das Datenübertragungsleitungsbündel DL bzw. mit den an das interne Datenübertragungsleitungsbündel PBC-B angeschalteten Einrichtungen.

Über den doppeltgerichteten Speicher FSP für Steuerinformationen ist der Austausch von Informationen möglich. Die Steuerung dieses Speichers wird von der der internen Steuerung zugeordneten Steuereinrichtung MSP übernommen. Die Übergabe von Steuerinformationen von und zu dem Speicher FSP erfolgt mittels des Zustandsregisters STATUS 1 mit einem Unterbrechungsbefehl bzw. mit einem Befehl des Registers MPC bzw. mit einem Befehl bzw. einem Rückkriterium der zentralen Steuerung oder mit internen Steuersignalen der Schnittstellenbaugruppe SB. Die Schnittstellenschaltung MI der peripheren Steuerung MP steuert die zum PCM-Zeitraster asynchrone Informationsübertragung über das interne Datenübertragungsleitungsbündel PBC-B und erfüllt dabei folgende Aufgaben:

Auswerten der Schnittstellenbaugruppeninformationen, die Anwenderbefehle betreffen sowie das Verteilen der im doppeltgerichteten Speicher FSP zwischengespeicherten Informationen der Schnittstellenbaugruppe, ferner das Abspeichern der pro Schnittstellenbaugruppenbefehl angeforderten internen Informationen in dem doppeltgerichteten Speicher FSP, die Steuerung der Datenübertragung bei indirekter Adressierung, die Steuerung der Zustandslogik (LL-Logic), das Abspeichern der Signalisierungsinformationen im Sendespeicher FXP, die Aufnahme der Signalisierungsinformationen ohne Zwischenspeicherung und zuletzt die Koordinierung der einzelnen Übertragungsarten (PCM-Verfahren und HDLC-Prozedur) mittels einer Prioritätslogik.

Ein asynchroner Informationsaustausch ist zwischen folgenden Einrichtungen möglich:

EP 0 264 890 B1

| Empfänger / Sender | FXP | FSP | SIU | CAM | DC |
|---|---|---|---|---|---|
| HDP | | | x | | x |
| FSP | | | x | x | x |
| SIU | x | x | | | |
| CAM | | x | | | |
| DC | | x | | | |

Der Umsetzer BIR zwischen dem internen Datenübertragungsleitungsbündel PBC-B und dem Datenübertragungsleitungsbündel MD (Fig. 1) der peripheren Steuerung MP dient als Schnittstelleninformationszwischenspeicher mit indirekter Adressierung. Dieser Umsetzer BIR wird von der Schnittstelle der peripheren Steuerung über direkte Adressierung erreicht. Der Informationsaustausch zwischen dem Umsetzer BIR und einem Speicher, in dem die Ziele bzw. die Ursprünge gespeichert sind, wird von den Steuerschaltmitteln SM veranlaßt und gesteuert.

Das funktionelle Verhalten der Schnittstellenbaugruppe SB wird zum einen bestimmt durch die Initialisierung und die statische Einstellung und zum anderen durch die Übergabe von Parameteradressen und Steuerbefehlen, die von der peripheren Steuerung MP selbst bzw. von der zentralen Steuerung über die serielle Schnittstelle MI für die Informationen mit den Nachrichtenformat mit variabler Datenlänge übergeben werden. Für die Übernahme von Informationen über das Datenübertragungsleitungsbündel DL ist die Schnittstellenbaugruppenadresse, die Schnittstellenbaugruppenart und die Steuerart zu kennzeichnen und sind ferner die Eigenschaften der Sende- und Empfangseinrichtung HDP, beispielsweise das Teilerverhältnis des Informationstaktes und der Schnittstellenanschluß zu kennzeichnen. Die entsprechenden Vorgaben werden über die Schnittstelle der peripheren Steuerung vor der Inbetriebnahme der Schnittstellenbaugruppe vorgenommen. Ist die periphere Steuerung angeschlossen, so erfolgt die Einstellung durch Übergabe der entsprechenden Informationen seitens der internen Steuerung. Vor der Inbetriebnahme sind dann noch eine Reihe von Anweisungen in den vorhandenen Registern aufzunehmen. Diese Anweisungen dienen der statischen Einstellung und ändern sich im Normalfall während des Betriebes nicht. Zu den Anweisungen gehören beispielsweise die Kennzeichnung der Art des PCM-Systems, die Kennzeichnung der zeitlichen Lage des Strobe für Signalisierung, die Kennzeichnung der Art und Periode der Zustandsbearbeitung der LL-LOGIC, die Kennzeichnung des Zeitsteuertaktes der PCM-Sprechwegenanschlüsse und so weiter. Ferner gehört zu den Anweisungen die Kennzeichnung der Steuerung der 16 x 64 kbit-Kanäle zwischen Teilnehmer und Sprechwegekoppelnetzwerk SN. Diese sind im Anpassungsspeicher CAM gespeichert.

Mit den vorgenannten Einstellungen ist die Schnittstellenbaugruppe SB in der Lage, die Steuerung der Sprach-, Informations-und Signalisierungswege durchzuführen. Dabei werden die notwendigen Parameterbefehle und Steuerbefehle der Schnittstellenbaugruppe SB in Form von Anwenderbefehlen von der zentralen Steuerung geliefert. Zum Zwecke einer funktionellen Erweiterung ist der Anschluß einer zusätzlichen Steuerung in Form eines Mikrocomputers an die parallele Schnittstelle EP möglich. Die periphere Steuerung MP, die auch als Mikrocomputer ausgeführt ist, hat die Möglichkeit, die Schnittstellenbaugruppe über direkt adressierbare Register zu steuern bzw. Zustände abzufragen und damit folgende interne Abläufe einzuleiten bzw. zu beeinflussen: Interruptgesteuerter Zugriff auf Zustandsdaten (LL-Logik), interruptgesteuerter Zugriff auf sprechwege- und teilnehmerseitige 64 kbit-Kanäle, der Austausch von Informationspaketen zwischen der Schnittstellenbaugruppe SB und der zentralen Steuerung sowie die Erweiterung der logischen Ebene des Datenaustausches imi Nachrichtenformat mit variabler Datenlänge (HDLC-Prozedur).

Es handelt sich bei der beschriebenen Schnittstellenbaugruppe SB also um eine Baugruppe, welche einer Gruppe von Teilnehmern bzw. einer Gruppe von Leitungsübertragungen bzw. einer kombinierten Gruppe von Teilnehmern und Leitungsübertragungen zugeordnet ist. In Abhängigkeit von der Größe der Anlage sind eine entsprechende Vielzahl solcher Schnittstellenbaugruppen vorhanden. Diese Schnittstellenbaugruppen sind entweder bei größeren Anlagen über Gruppenkoppler oder bei kleineren Anlagen direkt mit einem Sprechwegekoppelnetzwerk SN, wie in FIG 1 dargestellt, verbunden. Die Schnittstellenbaugruppe SB ist also gemeinsam einer Gruppe von Teilnehmern und/oder Leitungsübertragungen zugeteilt und sowohl über entsprechende Leitungen für für die Übertragung der Sprachinformationen im Pulscodemodulationsverfahren und auch zur Übertragung von sonstigen Daten im Pulscodemodulationsverfahren mit dem Sprechwegekoppelnetzwerk SN als auch mit einer Gruppensteuerung GP verbunden.

Die Schnittstellenbaugruppe SB weist Zeit- und Steuerschaltmittel ZM, SM für das pulscodierte Senden und Empfangen von Sprachinformationen zum Sprechwegekoppelnetzwerk SN bzw. vom Sprechwegekoppelnetzwerk SN über die PCM-Schnittstellenschaltung PIM auf, die ebenfalls mit dem internen Datenübertragunsleitungsbündel PBC-B in Verbindung steht.

Der Schnittstellenbaugruppe SB ist eine dem Datenübertragungsleitungsbündel DL zugeordnete Sende- und Empfangseinrichtung HDP für den Empfang und das Senden von Informationen zwischen der zentralen Steuerung und der peripheren Steuerung MP in einem Nachrichtenformat mit variabler Datenlänge (HDLC-Prozedur) zugeordnet, welche ebenfalls mit dem internen Datenübertragungsleitungsbündel PBC-B in Verbindung steht.

Die pulscodiert übertragenen Daten, die über das Sprechwegekoppelnetzwerk SN gesendet bzw. empfangen werden, sind Daten, die einem Rechner bzw. einem Auswertegerät zugeführt werden können. Bei diesen Daten handelt es sich beispielsweise um Ferndaten, die Aussagen, über Störungen, Prüfungen, Feuer und sonstige Überwachungen betreffen.

Der Austausch der vorstehend genannten Informationen im normalen Kanalbetrieb über die im Pulscodemodulationsverfahren betriebenen Kanäle erfolgt in zwei frei programmierbaren Zeitschlitzen, über einen der beiden PCM-Übertragungswege A bzw. B. In einem solchen Falle werden die Informationen an den zu der Datenübertragungsleitung DL führenden Anschlüssen ungültig. Für die Übertragung der Informationen über die Sprechwege sind die Zeit- und Steuerschaltmittel ZM, SM ausgenutzt, die die Auswahl eines belegbaren PCM-Kanals vornehmen. Über den Speicher MO-A wird in Zusammenarbeit mit den Steuerschaltmitteln SM und mit in den Zeitschaltmitteln ZM vorhandenen Kanalspeichern CHR1, CHR2 in den programmierten Zeitschlitzen eine Freikennung erkannt. Ist dies der Fall, so wird die Sende- und Empfangseinrichtung HDP für die entsprechende Belegung des gewählten PCM-Kanals programmiert. Die Belegung bleibt solange bestehen, bis eine Freigabe veranlaßt wird. Die Belegung eines freien Kanals durch die Sende- und Empfangseinrichtung HDP wird von der peripheren Steuerung MP veranlaßt. Für die Belegung eines freien Kanals müssen zwei beliebige Zeitschlitze in den Kanalspeichern CHR1 und CHR2 mittels indirekter Adressierung eingetragen werden. Ist dies geschehen, so werden von der PCM-Schnittstelle PIM die ankommenden Informationen als solche erkannt, die als variable Daten von der Sende- und Empfangseinrichtung HDP zu verarbeiten sind. Entsprechend wird auch die Übertragung der Informationen mit variablen Datenlängen in bestimmten Zeitschlitzen bestimmter Länge im ausgewählten Kanal und in aufeinanderfolgenden Rahmen übertragen. Die Datenübertragungsgeschwindigkeit beträgt dabei maximal 2 × 64 Kbit/Sekunde pro Richtung.

Anstelle der programmierbaren Zeitschlitze kann auch ein Betrieb mit je einem Empfangs- und einem Ende-Zeitschlitz gewählt werden. Bei dieser Betriebsart wird der in einem der Kanalspeicher, z.B. CHR1, eingetragene Wert als Empfangszeitschlitz und der im anderen Kanalspeicher CHR2 eingetragene Wert als Sendezeitschlitz interpretiert. Es werden nur die im Empfangs-Zeitschlitz im gewählten PCM-Kanal ankommenden Informationen zur Sende- und Empfangseinrichtung HDP durchgeschaltet und nur im Sende-Zeitschlitz werden entsprechende Informationen, die von der Sende- und Empfangseinrichtung HDP kommen, ausgegeben. In diesem Falle beträgt die Datenübertragungsgeschwindigkeit maximal 1 × 64 Kbit/Sekunde pro Richtung.

Wird der Kanalbetrieb im Zeitschlitz N programmiert, so kann die zeitliche Lage des gesendeten und empfangenen Informations-stromes sowie der Übernahmeflanken abhängig vom Binärcode dreier vorhandener Bits X-SHIFT bzw. R-SHIFT vorgenommen werden. In diesem Zusammenhang wird auf die FIG 3 verwiesen.

Die Schnittstellenbaugruppe SB ist konzipiert als lokale Steuerung, welche von der übergeordneten Steuerung MP kontrolliert wird. Alle Funktionen laufen in Zusammenarbeit mit dieser Steuerung MP ab, die einerseits die Aufgaben der peripheren Vorverarbeitung von Informationen übernimmt, andererseits der Aufweitung der Ablaufverfahren auf ein volles Informationspaket für die Sende- und Empfangseinrichtung HDP dient. Die Informationsübertragung erfolgt über die bereits genannten Datenübertragungsleitungen MD und PBC-B. Nur unbekannte Befehle werden zur Bearbeitung der zentralen Steuerung der Fernsprechanlage, insbesondere Fernsprechnebenstellenanlage, übergeben. Der Standardrahmen eines Nachrichtenformats mit variabler Datenlänge besteht aus Startkennzeichen, 8-bit-Steuerfeld, Informationsfeld, 16-bit-CRC-Feld und Endkennzeichen.

Wird angenommen, daß Informationen über die Sende- und Empfangseinrichtung HDP einem PCM-Kanal des über das Sprechwegekoppelnetzwerk geführten Sprechweges geführt werden muß, so werden entsprechende Vorbereitungssignale für die Vorbereitung der Belegung eines freien Kanals erzeugt. Als Reaktion auf diese Befehle werden die schnittstellenbaugruppeninternen Daten im doppeltgerichteten Speicher FSP abgespeichert und zum Senden bereitgestellt. Das Informationsfeld dieser Befehle enthält jeweils ein Byte mit dem Operationscode und der Ursprungsadresse. Zur Vorbereitung der Belegung, z.B. des Kanals B, wird die Zeitschlitzzuordnung kontrolliert und werden die Speicher CAM1 (Empfang) und CAM2 (Senden) des Anpassungsspeichers CAM für den belegenden B-Kanal-Teilnehmer gelesen; diese Informationen werden im Speicher FSP aufgenommen. Anschließend wird die Einstellung der internen Speicher und Register kontrolliert.

Mit einem Vorbereitungssignal wird ein Signalisierungsspeicher kontrolliert und mit einem Befehl gezielt das ankommende Signalbyte des den Kanal belegenden Teilnehmers ebenfalls im doppeltgerichteten Speicher FSP gespeichert. Ferner wird die Zeitschlitzzuordnung kontrolliert, indem die Speicher CAM1 (Empfang) und CAM2 (Senden) für die durch den bezeichneten A-Kanal-Beleger eingestellte Verbindung gelesen und die entsprechenden Daten ebenfalls in den doppeltgerichteten Speicher FSP aufgenommen werden. Die empfangenen Informationen enthalten einen Befehl und ein Informationsfeld, bestehend aus 1 bis 16 Bytes, welche im Speicher FSP gespeichert werden. Durch einen entsprechenden Befehl der peripheren Steuerung MP wird ein Ablauf ausgelöst, bei dem die Daten von dem doppeltgerichteten Speicher FSP an das eigentliche Ziel übertragen werden. Beim Empfang peripherer Befehls-Vorbereitungssteuerdaten werden die Kontrolldaten aus den Peripheriebausteinen erneut ausgelesen. Abhängig vom Kontroll-Wort wird eine definierte Anzahl der von dem Peripheriebaustein zurückgesendeten Einstelldaten im Speicher FSP zwischengespeichert. Nach Abschluß dieses Vorganges befindet sich im Speicher FSP das gespiegelte Kontroll-Wort und abhängig von diesem weitere zwei, sechs, zehn oder vierzehn Datenbytes. Die Zustandslogik LL-LOGIC ist auf einen auswählbaren Ausgangswert zurückzusetzen. Die Bytes, für ein oder mehrere der Speicher oder Register bestimmt sind, werden in einer Meldung zusammengefaßt.

Beim Aufbau einer Verbindung für einen A-Kanal-Teilnehmer kann die Länge des Datenfeldes variabel zwischen 2 bis 14 Bytes liegen. Das erste Datenbyte wird in die bezeichnete Adresse des Speichers CAM1 (Empfang) geschrieben, das zweite Byte in den Speicher CAM2 des Anpassungsspeichers CAM. Weitere Bytes werden an den Peripheriebaustein als Einstelldaten gesendet.

Wie aus den Figuren 1 und 2 hervorgeht und vorstehend auch bereits beschrieben ist, arbeiten die einer Gruppensteuerung GP zugeordnete Schnittstellenbaugruppe SB3 und die der zentralen Steuerung ZS zugeordnete Schnittstellenbaugruppe SBZ in der gleichen Weise wie die Schnittstellenbaugruppen SB1 und SB2 für Teilnehmerleitungen und/oder Verbindungsleitungen. Es ist dabei einer Gruppensteuerung bzw. der zentralen Steuerung jeweils seine Schnittstellenbaugruppe zur Erhöhung der Zugriffsmöglichkeit zugeordnet. Läßt die Belastung der Schnittstellenbaugruppen SB3 und SBZ es zu, so kann auch eine begrenzte Anzahl von Teilnehmer- und/oder Verbindungsleitungen an einen der Schnittstellenbaugruppe SB3 und SBZ angeschlossen werden. Sind keine Anschlüsse für Teilnehmer- und/oder Verbindungsleitungen vorgesehen, so entfallen auch entsprechende Teile der Schnittstellenbaugruppe SB3 bzw. SBZ, z.B. die Schnittstellenschaltung SUI.

Auf diese Weise kann eine universelle, integrierbare Schnittstellenbaugruppe sowohl für den Informationsaustausch zwischen Teilnehmerstellen und Verbindungsleitungen als auch für den Informations- und Befehlsaustausch zwischen verschiedenen Steuerungen über das Sprechwegekoppelnetz verwendet werden. Hierdurch wird der interne Datenaustausch zwischen Steuerungen der gleichen Anlage und der Datenaustausch zwischen externen, entfernt gelegenen Steuerungen vereinheitlicht.

Aus dem vorstehenden geht hervor, daß die Gruppensteuerung der eigenen Anlage untereinander, mit der zentralen Steuerung und mit Steuerungen anderer Anlagen über das Sprechwegekoppelnetz für Datenaustausch zusammenschaltbar sind.

**Ansprüche**

1. Schaltungsanordnung für eine Fernmeldeanlage, insbesondere Fernsprechnebenstellenanlage, mit Schnittstellenbaugruppen (SB), welche jeweils sowohl mit einem Sprechwegekoppelnetzwerk (SN), als auch über ein Datenübertragungsleitungsbündel (DL) mit einer für die Verbindungswegeherstellung der ankommend bzw. abgehend belegbaren Teilnehmer- bzw. Verbindungsleitungen vorgesehenen Steuerung (GP, ZS) in Verbindung stehen und wobei die Informationen über das Sprechwegekoppelnetzwerk im Pulscodemodulationsverfahren und die Informationen über das Datenübertragungsleitungsbündel in einem Nachrichtenformat mit variabler Datenlänge (HDLC-Prozedur) übertragen werden, **dadurch gekennzeichnet,** daß eine Schnittstellenbaugruppe (SB) mittels einer ihr zugeordneten Sende- und Empfangseinrichtung (HDP), welche die von der zugeordneten Steuerung (z.B. GP bzw. ZS) empfangenen Informationen in pulscodierte Informationen umsetzt, zum Informationsaustausch mit einer anderen Steuerung über das Sprechwegekoppelnetzwerk (SN) mit einer dieser Steuerung zugeordneten Schnittstellenbaugruppe (z.B. SBZ) mit einer entsprechenden Sende- und Empfangseinrichtung (HDP) verbindbar ist.

2. Schaltungsanordnung nach Anspruch 1,
**dadurch gekennzeichnet,** daß die einzelnen Gruppensteuerungen (GP) sowohl untereinander als auch mit der zentralen Steuerung (ZS) über die zugeordneten Schnittstellenbaugruppen (z.B. SB3, SBZ) und das Sprechwegekoppelnetzwerk (SN) verbindbar sind.

## Claims

1. Circuit arrangement for a communication installation, in particular a private branch exchange, with interface modules (SB) which are in each case connected both to a speech path switching network (SN) and via a data transmission trunk group (DL) to a control system (GP, ZS) provided for establishing the connecting paths of the subscriber or connecting lines, which can be seen as incoming and outgoing, and in which arrangement information items are transmitted via the speech path switching network in the pulse code modulation method and the information items are transmitted via the data transmission trunk group in a message format having a variable data length (HDLC procedure), characterised in that an interface module (SB) can be connected by means of a transmit and receive device (HDP) associated with it, which converts the information items received from the associated control system (for example GP or ZS) into pulse-coded information items, for the purpose of exchanging information with another control system via the speech path switching network (SN) to an interface module (for example SBZ) associated with this control system, having a corresponding transmit and receive device (HDP).

2. Circuit arrangement according to Claim 1, characterised in that the individual group control systems (GP) can be connected both to one another and to the central control system (ZS) via the associated interface modules (for example SB3, SBZ) and the speech path switching network (SN).

## Revendications

1. Montage pour une installation de télécommunications, notamment une installation téléphonique à postes supplémentaires, comportant des modules d'interface (SB), qui sont raccordés respectivement, aussi bien par un réseau de couplage de voies téléphoniques (SN) que par un faisceau (DL) de lignes de transmission de données, à une unité de commande (GP,ZS), qui est prévue pour l'établissement de voies de liaison dans les lignes d'abonnés ou lignes de jonction pouvant être occupées au départ ou à l'arrivée, et dans lequel les informations concernant le réseau de couplage de voies téléphoniques sont transmises selon le procédé de modulation d'impulsions codées et les informations concernant le faisceau de lignes de transmission de données sont transmises avec un format d'information possédant une longueur de données variable (procédure HDLC), caractérisé par le fait qu'un module d'interface (SB) peut être raccordé, au moyen d'un dispositif d'émission et de réception (HDP), qui lui est associé et qui convertit les informations reçues depuis l'unité de commande associée (par exemple GP ou ZS) en informations sous la forme d'impulsions, pour réaliser l'échange d'informations avec une autre unité de commande par l'intermédiaire du réseau de couplage de voies téléphoniques (SN), à un module d'interface (par exemple SBZ) associé à cette unité de commande et comportant un dispositif d'émission et de réception (HDP) correspondant.

2. Montage suivant la revendication 1, caractérisé par le fait que les différentes unités de commande de groupe (GP) peuvent être raccordées aussi bien entre elles qu'à l'unité centrale de commande (ZS) par l'intermédiaire des modules d'interface associés (par exemple SB3, SBZ) et du réseau de couplage de voies téléphoniques (SN).

FIG 1

FIG 2

FIG 3

EP 0 264 890 B1